# EUROPÄISCHE PATENTSCHRIFT

(11) **EP 1 000 092 B1**
(45) Veröffentlichungstag und Bekanntmachung des Hinweises auf die Patenterteilung: **12.06.2002**
(21) Anmeldenummer: 98943739.7
(22) Anmeldetag: 17.07.1998
(51) Int. Cl.: C08F 4/64, C07F 17/00, C08F 10/00

(54) **KATALYSATOREN AUF BASIS VON FULVEN-METALLKOMPLEXEN**
CATALYSTS BASED ON FULVENE METAL COMPLEXES
CATALYSEURS A BASE DE COMPLEXES METALLIQUES DE FULVENE

(30) Priorität: 30.07.1997 DE 19732804
(43) Veröffentlichungstag der Anmeldung: 17.05.2000
(73) Patentinhaber: Bayer Aktiengesellschaft, 51368 Leverkusen (DE)
(72) Erfinder: BECKE, Sigurd, D-51503 Rösrath (DE); BECKHAUS, Rüdiger, D-52072 Aachen (DE)
(86) Internationale Anmeldenummer: EP9804459
(87) Internationale Veröffentlichungsnummer: WO9906448

(56) Entgegenhaltungen:
- WO-A-92/12112
- SUN, YIMIN ET AL: "Intramolecular Ion-Ion Interactions in Zwitterionic Metallocene Olefin Polymerization Catalysts Derived from "Tucked-In" Catalyst Precursors and the Highly Electrophilic Boranes XB(C6F5)2 (X = H, C6F5)" J. AM. CHEM. SOC. (1997), 119(22), 5132-5143 CODEN: JACSAT;ISSN: 0002-7863, 4. Juni 1997, XP002087846

## Beschreibung

Die vorliegende Erfindung betrifft ein Katalysatorsystem auf Basis von Fulven-Metallkomplexen sowie deren Verwendung für die Polymerisation von ungesättigten Verbindungen, insbesondere fiir die Polymerisation und Copolymerisation von Olefinen und/oder Dienen.

Die Verwendung von Cyclopentadienyl-Metallkomplexen, insbesondere die Verwendung von Metallocen-Komplexen im Gemisch mit aktivierenden Cokatalysatoren, bevorzugt Alumoxanen, (MAO) zur Polymerisation von Olefinen und Diolefinen ist seit langem bekannt (z.B. EP-A 129 368, 347 128, 347 129, 69 951, 351 392, 485 821, 485 823).

Die Metallocene haben sich als hoch wirksame, spezifische Katalysatoren bei der Polymerisation von insbesondere Olefinen erwiesen. Zur Steigerung der Aktivität, Selektivität, Steuerung der Mikrostruktur, der Molgewichte und der Molgewichtsverteilung wurden daher in den letzten Jahren eine Vielzahl neuer Metallocen-Katalysatoren bzw. Metallocen-Katalysator-Systeme für die Polymerisation von olefinischen Verbindungen entwickelt.

Die oben beschriebenen Katalysatorsysteme auf Basis von MAO haben jedoch gravierende Nachteile, wie nachfolgend näher erläutert wird. Zum einen lassen sich Aluminoxane, insbesondere MAO, weder in situ, noch in der Präformierung mit hoher Reproduzierbarkeit herstellen. MAO ist ein Gemisch verschiedener Aluminiumalkylhaltiger Spezies, die miteinander im Gleichgewicht vorliegen. Die Anzahl und die Struktur der in MAO vorkommenden Aluminiumverbindungen ist nicht genau definiert. Daher ist die Polymerisation von Olefinen mit Katalysatorsystemen, die MAO enthalten, nicht immer reproduzierbar. Außerdem ist MAO nicht lagerstabil und verändert seine Zusammensetzung bei thermischer Beanspruchung. Ein schwerwiegender Nachteil ist der hohe Überschuß an MAO, der bei der Aktivierung von Metallocenen nötig ist. Das große MAO/Metallocen-Verhältnis ist eine zwingende Voraussetzung, um hohe Katalysatoraktivitäten zu erhalten. Hieraus resultiert ein entscheidender Verfahrensnachteil, da bei der Aufarbeitung die Aluminiumverbindung vom Polymeren abgetrennt werden muß. MAO ist außerdem ein kostenbestimmender Faktor. Hohe MAO-Überschüsse sind fiir die technische Anwendung unwirtschaftlich.

Um diese Nachteile zu umgehen, wurden in den vergangenen Jahren Alumoxan-freie Polymerisations-Katalysatoren entwickelt. Beispielsweise wird von Jordan et al. in J. Am. Chem. Soc., Vol. 108 (1986), 7410 von einem kationischen Zirconocen-Methylkomplex berichtet, der als Gegenion Tetraphenylborat besitzt und in Methylenchlorid Ethylen polymerisiert. In EP-A 277 003 und EP-A 277 004 werden ionische Metallocene beschrieben, die durch Reaktion von Metallocenen mit ionisierenden Reagenzien hergestellt werden. In EP-A 468 537 werden Katalysatoren mit ionischer Struktur beschrieben, die durch Umsetzung von Metallocendialkylverbindungen mit Tetrakis(pentafluorphenyl)bor-Verbindungen entstehen. Die ionischen Metallocene eignen sich als Katalysatoren zur Polymerisation von Olefinen. Ein Nachteil ist jedoch die große Empfindlichkeit der Katalysatoren gegenüber Verunreinigungen, wie z.B. Feuchtigkeit und Sauerstoff. Bei der Durchführung von Polymerisationen müssen daher Vorrichtungen getroffen werden, um eine größtmögliche Reinheit der eingesetzten Monomere und Lösungsmittel zu garantieren. Dies ist technisch sehr aufwendig und teuer.

Um diese Nachteile auszuräumen, werden in EP-A 427 697 und in WO 92/01723 Verfahren zur Polymerisation von Olefinen beschrieben, wobei die Kombination von Metallocendichloriden mit Aluminiumalkylen und Tetrakis(pentafluorphenyl)bor-Verbindungen als Katalysatorsystem eingesetzt wird. Die Aluminiumalkylverbindungen dienen einerseits als Alkylierungsmittel der Metallocenkomponente und fungieren andererseits als Scavenger, um die aktive Katalysatorspezies vor Verunreinigungen zu schützen.

Die dem Stand der Technik entsprechenden Verfahren zur Darstellung der kationischen Metallocene haben jedoch den Nachteil, daß die kationisierenden Reagentien, z. B. Tetrakis(pentafluorphenyl)bor-Verbindungen teilweise aufwendig zu synthetisieren sind und ihre Verwendung kostenintensiv ist.

Nach Bercaw et al., JACS (1972), 94, 1219 entsteht durch Thermolyse von Bis(η⁵pentamethylcyclopentadienyl)titandimethyl der Fulvenkomplex (η⁶-2,3,4,5-Tetramethylcyclopentadienyl-1-methylen)(η⁵-pentamethylcyclopentadienyl)titanmethyl. Über die Polymerisationsaktivität dieses Komplexes ist nichts bekannt. In T. J. Marks et al., JACS (1988), 110, 7701 wird die Thermolyse von Pentamethyl-cyclopentadienyl-Komplexen des Zirconiums und Hafniums beschrieben. Durch Thermolyse von Bis(η⁵-pentamethylcyclopentadienyl)zirconiumdiphenyl entsteht der Fulvenkomplex (η⁶-2,3,4,5-Tetramethylcyclopentadienyl-1-methylen)(η⁵-penta-methylcyclopentadienyl)zirconiumphenyl. Diese Verbindung ist alleine nicht polymerisationsaktiv.

Es bestand daher die Aufgabe, ein Katalysatorsystem zu finden, welches die genannten Nachteile vermeidet. Ferner sollten Verfahren auf der Basis von Aluminoxanfreien Metallocensystemen entwickelt werden.

Es wurde nun überraschend gefunden, daß Katalysatorsysteme auf Basis von Fulven-Metallkomplexen sich besonders gut für die gestellten Aufgaben eignen.

Gegenstand der vorliegenden Erfindung ist also ein Katalysatorsystem bestehend aus
a) einem Fulven-Metallkomplex der Formel 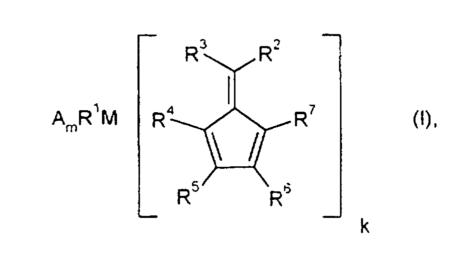 wobei
   - M: ein Metall aus der Gruppe IIIb, IVb, Vb, VIb oder der Lanthaniden oder der Actiniden des Periodensystems der Elemente [N.N. Greenwood, A. Earnshaw, Chemie der Elemente, VCH 1990] ist,
   - A: ein gegebenenfalls ein- oder mehrfach verbrückter anionischer Ligand bedeutet,
   - R¹, R², R³, R⁴, R⁵, R⁶, R⁷: gleich oder verschieden sind und stehen für Wasserstoff, Halogen, eine Cyanogruppe, eine C₁- bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe, eine C₆- bis C₂₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀- Arylalkenylgruppe, eine C₂ bis C₁₀-Alkinylgruppe, eine gegebenenfalls durch C₁-C₁₀-Kohlenwasserstoffreste substituierte Silylgruppe
   oder
   - R¹, R², R³, R⁴, R⁵, R⁶, R⁷: jeweils zusammen mit den sie verbindenden Atomen ein oder mehrere aliphatische oder aromatische Ringsysteme bilden, welche ein oder mehrere Heteroatome (O, N, S) enthalten können und 5 bis 10 Kohlenstoffatome aufweisen,
   - m: 0, 1, 2 oder 3 bedeutet sowie
   - k: 1, 2 oder 3 ist und die Summe von m + k in Abhängigkeit von der Oxidationsstufe von M 1 bis 5 beträgt
   und
b) einem zur Aktivierung des Metallkomplexes a) geeignete Aluminoxan- und Bor-freie Lewissäure, wobei das molare Verhältnis von Komponente a) zu Komponente b) im Bereich von 1:0,1 bis 1:10 000, bevorzugt 1:1 bis 1:1 000, liegt.

Die Synthese der Fulven-Metallkomplexe der Formel (I) ist bekannt und beispielsweise beschrieben in T. J. Marks et al., Organometallics 1987, 6, 232-241.

Ein weiterer Gegenstand der vorliegenden Erfindung ist ein Verfahren zur Herstellung eines Katalysatorsystems, dadurch gekennzeichnet, daß ein Gemisch aus einer zur Aktivierung geeigneten Aluminoxan- und Bor-freien Lewissäure und einem Metallkomplex der Formel (II) 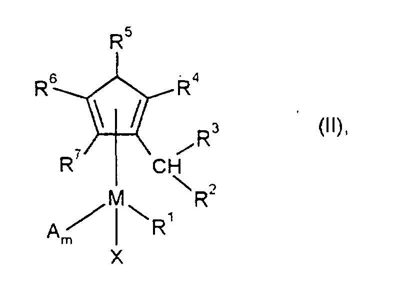 wobei
- M, A, R¹ bis R⁷: die gemäß Anspruch 1) angegebene Bedeutung haben und
- X: für Wasserstoff, Halogen, eine C₁- bis C₃₀-Alkylgruppe, eine C₆- bis C₁₀-Arylgruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, eine C₂- bis C₁₀-Alkinylgruppe, eine gegebenenfalls substituierte Silylgruppe steht,
in einem geeigneten Reaktionsmedium thermisch im Temperaturbereich von 60 bis 250°C behandelt wird.

Die thermische Behandlung erfolgt im Temperaturbereich von 60°C bis 250°C, bevorzugt von 90°C bis 150°C. Die Dauer der thermischen Behandlung liegt im Bereich von 1 Minute bis 20 Stunden, bevorzugt im Bereich von 15 Minuten bis 120 Minuten. Geeignete Reaktionsmedien sind zum Beispiel aromatische Kohlenwasserstoffe, wie Benzol oder Toluol, oder aliphatische Kohlenwasserstoffe, wie Hexan, Heptan, Octan, Cyclohexan oder Gemische der verschiedenen Kohlenwasserstoffe. Die thermische Behandlung wird nicht in Gegenwart eines Olefins oder Diolefins durchgeführt. Das molare Verhältnis der Lewissäure zu dem Metallkomplex der Formel (II) liegt im Bereich von 1:0, 1 bis 1:10 000, bevorzugt 1:1 bis 1:1 000.

Als Fulven-Metallkomplexe der Formel (I) kommen insbesondere solche in Frage, in denen
- M: ein Metall aus der Gruppe IVb, Vb oder der Lanthaniden des Periodensystems der Elemente ist,
- A: eine Allylgruppe der Formel C₃R⁶₅, wobei R⁶ die gleiche Bedeutung hat wie
R¹ bis R⁵ in der Formel (I),
ein Halogenid, F, Cl, Br, J,
ein Sulfonat der Formel O₃SR⁶,
ein Amid der Formel NR⁶₂,
ein Pyrazolat der Formel N₂C₃R⁷₃ mit R⁷ für Wasserstoff oder eine C₁-C₁₀-Alkylgruppe,
ein Pyrazolylborat der Formel R⁶B(N₂C₃R⁷₃)₃
ein Alkoholat oder Phenolat der Formel OR⁶,
ein Siloxan der Formel OSiR⁶₃,
ein Thiolat der Formel SR⁶,
ein Acetylacetonat der Formel (R¹CO)₂CR⁶,
ein Diimin der Formel (R¹N=CR⁶)₂,
ein Cyclopentadienyl der Formel C₅H_{q}R⁶_{5-q} mit q für 0, 1, 2, 3, 4, 5,
ein Indenyl der Formel C₉H₇₋ᵣR⁶ᵣ mit r für 0, 1, 2, 3, 4, 5, 6, 7,
ein Fluorenyl der Formel C₁₃H₉₋ₛR⁶ₛ mit s für 0, 1, 2, 3, 4, 5, 6, 7, 8, 9 sowie ein C₁- bis C₃₀-Alkylrest, ein C₆- bis C₁₀-Arylrest, sowie ein C₇- bis C₄₀-Alkylarylrest ist,
- R¹ bis R⁵ und R⁶: für eine C₁-C₃₀-Alkylgruppe, eine C₆-C₁₀-Arylgruppe, eine C₇-C₄₀-Alkylarylgruppe, insbesondere für Wasserstoff, Methyl, Ethyl, n-Propyl, Isopropyl, n-Butyl, Isobutyl, tert.-Butyl, Phenyl, Methylphenyl, Cyctohexyl und Benzyl stehen,
- m und k: die zuvor genannte Bedeutung besitzen.

Ganz besonders bevorzugt sind Fulven-Metallkomplexe der Formel (1), in der
- M: für Titan, Zirkonium, Hafnium; Vanadium, Niob und Tantal steht,
- A: für Bis(trimethylsilyl)amid, Dimethylamid, Diethylamid, Diisopropylamid, 2,6-Di-tert.-butyl-4-methylphenolat, Cyclopentadienyl, Methylcyclopentadienyl, Benzylcyclopentadienyl, n-Butylcyclopentadienyl, Pentamethylcyclo-pentadienyl, Tetramethylcyclopentadienyl, 2,4,7-Trimethylcyclopentadienyl, Dimethylcyclopentadienyl, Indenyl, 2-Methylindenyl, 2-Methyl-4,5-benzoindenyl, 2-Methyl-4-phenylindenyl, Fluorenyl oder 9-Methyl-fluorenyl steht.

Die angegebene Formel (I) für die Fulven-Metallkomplexe ist als eine formale Darstellung der Bindungsverhältsnisse zu sehen und stellt ein Beispiel einer Struktur-Variante dar. Wie dem Fachmann bekannt ist, sind die Bindungsverhältnisse des Metallkomplexes u.a. abhängig vom Zentralatom, von der Oxidationsstufe sowie von den Substituenten des Fulven-Liganden.

Als Lewissäuren kommen die auf dem Gebiet der Ziegler-Natta-Katalyse bekannten Cokatalysatoren in Frage, wie z. B. Verbindungen des Aluminiums, Magnesiums oder Zink. Als Lewissäuren eignen sich insbesondere Trialkylaluminiumverbindungen, wie Trimethylaluminium, Triethylaluminium, Triisobutylaluminium, Triisooctylaluminium, darüber hinaus Dialkylaluminiumverbindungen, wie Diisobutylaluminiumhydrid, Diisobutylaluminiumfluorid und Diethylaluminiumchlorid, außerdem substituierte Triarylaluminiumverbindungen, wie Tris(pentafluorphenyl)aluminium, sowie ionische Verbindungen, die als Anion Tetrakis(pentafluorphenyl)aluminat enthalten, wie Triphenylmethyl-tetrakis(pentafluorphenyl)aluminat, sowie N,N-Dimethylanilinium-tetrakis(pentafluorphenyl)aluminat. Weitere Beispiele fiir geignete Lewissäuren sind Dialkylverbindungen des Zinks oder Magnesiums, wie Dimethylzink, Diethylzink, Diisobutylzink, Butylethylmagnesium, Dibutylmagnesium, sowie Dihexylmagnesium.

Selbstverständlich ist es möglich, die Cokatalysatoren im Gemisch untereinander einzusetzen.

Ein weiterer Gegenstand der vorliegenden Erfindung ist die Verwendung des neuen Katalysatorsystems für die Polymerisation von ungesättigten Verbindungen, insbesondere von Olefinen und Dienen. Als Polymerisation wird dabei sowohl die Homo- als auch die Copolymerisation der genannten ungesättigten Verbindungen verstanden. Insbesondere werden bei der Polymerisation eingesetzt C₂-C₁₀-Alkene, wie Ethylen, Propylen, Buten-1, Penten-1 und Hexen-1, Octen-1, Isobutylen und Arylalkene, wie Styrol. Als Diene werden insbesondere eingesetzt: konjugierte Diene, wie 1,3-Butadien, Isopren, 1,3-Pentadien, und nicht konjugierte Diene, wie 1,4-Hexadien, 1,5-Heptadien, 5,7-Dimethyl-1,6-octadien, 4-Vinyl-1-cyclohexen, 5-Ethyliden-2-norbornen, 5-Vinyl-2-norbornen und Dicyclopentadien.

Die erfindungsgemäßen Katalysatoren eignen sich für die Herstellung von Kautschuken auf Basis von Copolymeren des Ethylens mit einem oder mehreren der genannten α-Olefine und der genannten Diene. Darüber hinaus eignet sich das erfindungsgemäße Katalysatorsystem für die Polymerisation von Cyclo-Olefinen wie Norbornen, Cyclopenten, Cyclohexen, Cyclooctan, und der Copolymerisation von Cycloolefinen mit Ethylen oder α-Olefinen.

Die Polymerisation kann in flüssiger Phase, in Gegenwart oder Abwesenheit eines inerten Lösungsmittels, oder in der Gasphase durchgeführt werden. Als Lösungsmittel eignen sich aromatische Kohlenwasserstoffe, wie Benzol und/oder Toluol, oder aliphatische Kohlenwasserstoffe, wie Propan, Hexan, Heptan, Octan, Isobutan, Cyclohexan oder Gemische der verschiedenen Kohlenwasserstoffe.

Es ist möglich, das erfindungsgemäße Katalysatorsystem auf einen Träger aufgebracht einzusetzen. Als geeignete Trägermaterialien sind z.B. zu nennen: anorganische oder organische polymere Träger, wie Silicagel, Zeolithe, Ruß, Aktivkohle, Aluminiumoxid, Polystyrol sowie Polypropylen.

Dabei kann das erfindungsgemäße Katalysatorsystem in üblicher Weise auf die Trägermaterialien aufgebracht werden. Methoden zur Trägerung von Katalysatorsystemen sind beispielsweise beschrieben in US 4 808 561, 4 912 075, 5 008 228 und 4 914 253.

Die Polymerisation wird im allgemeinen bei Drücken von 1 bis 1 000, bevorzugt 1 bis 100 bar, und Temperaturen von -100 bis +250°C, bevorzugt 0 bis +150°C, durchgeführt. Die Polymerisation kann in üblichen Reaktoren, kontinuierlich oder diskontinuierlich durchgeführt werden.

Die Erfindung wird anhand der nachstehenden Beispiele näher erläutert.

Allgemeine Angaben: Herstellung und Handhabung organometallischer Verbindungen erfolgten unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert.
Die Synthese der Verbindungen der Formel (I) und der Formel (II) erfolgte in Anlehnung an T. J. Marks et al., *Organometallics* **6** (1987) 232-241. Die Verbindungen wurden mit ¹H-NMR, ¹³C-NMR und Massenspektroskopie charakterisiert.

### Abkürzungen:

- Cp* :: C₅(CH₃)₅
- Cp"" :: C₅(CH₃)₄H
- Ind :: C₉H₇
- Fv :: C₅(CH₃)₄=CH₂
- Fv"" :: C₅(CH₃)₃H=CH₂
- Ph :: C₆H₅
- PhLi :: Phenyllithium
- HV :: Hochvakuum
- RT :: Raumtemperatur

### A. Synthese der Verbindungen der Formel (II)

### Beispiel 1

### Bis(η⁵-pentamethylcyclopentadienyl)zirconiumdiphenyl, [Cp*₂ZrPh₂]

Man suspendierte 3.62 g (8.37 mmol) Bis(η⁵-pentamethylcyclopentadienyl)-zirconiumdichlorid in 60 ml Diethylether, kühlte die erhaltene gelb-weiße Suspension auf - 78°C und tropfte 13.90 ml (25.0 mmol) PhLi zu. Anschließend ließ man auf RT erwärmen und rührte über Nacht. Die beige Suspension wurde im HV zur Trockne eingeengt und der Rückstand in 40 ml Hexan aufgenommen. Diese Suspension wurde filtriert und die resultierende rote Lösung zur Hälfte eingeengt, wobei ein weißer Feststoff ausfiel. Zum weiteren Kristallisieren kühlte man die Suspension auf -20°C. Die Lösung wurde dekantiert und das verbleibende Produkt im HV getrocknet. Man erhielt 2.94 g (68%).

### Beispiel 2

### Bis(η⁵-tetramethylcyclopentadienyl)zirconiumdiphenyl, [(Cp"")₂ZrPh₂]

2.06 g (5.05 mmol) Bis(η⁵-tetramethylcyclopentadienyl)zirconiumdichlorid wurden in 60 ml Ether suspendiert, die erhaltene gelb-weiße Suspension auf -78°C abgekühlt und 8.48 ml (15.27 mmol) PhLi langsam zugetropft. Anschließend wurde auf RT erwärmt und über Nacht gerührt. Die gebildete orange Suspension wurde im HV zur Trockne eingeengt und der Rückstand in 40 ml Hexan aufgenommen. Man filtrierte und die engte das Filtrat zur Hälfte ein, wobei ein orange-gelber Feststoff ausfiel. Zum weiteren Kristallisieren wurde die Lösung auf -20°C gekühlt. Die Orangen, nadelförmigen Kristalle wurden isoliert und im HV getrocknet. Man erhielt 1.38 g (56 %).

### Beispiel 3

### (η⁵-Pentamethylcyclopentadienyl)(η⁵-indenyl)zirconium-diphenyl, [(Cp*)(Ind)ZrPh₂]

640 mg (1.55 mmol) (η⁵-Pentamethylcyclopentadienyl)(η⁵-indenyl)zirconium-dichlorid wurden in 40 ml Ether suspendiert. Bei -78°C tropfte man 2.41 ml (4.34 mmol) PhLi zu, ließ auf RT erwärmen und rührte über Nacht. Die braun-gelbe Suspension wurde im HV eingeengt, der Rückstand in *n*-Hexan aufgenommen und filtriert. Die resultierende klare gelb-braune Lösung wurde im HV zur Hälfte eingeengt und zum Kristallisieren auf-20°C gekühlt. Der dabei ausgefallene hellbeige Feststoff wurde isoliert und im HV getrocknet. Man erhielt 345 mg (45%).

### B. Synthese der Verbindungen der Formel (I)

### Beispiel 4

### η⁶-(2,3,4,5-Tetramethylcyclopentadienyl-1-methylen)(η⁵-pentamethylcyclo-pentadienyl)zirconiumphenyl, [(Cp*)(Fv)ZrPh]

4.20 g (8.14 mmol) Cp*₂ZrPh₂ gemäß Beispiel 1 hergestellt, wurden in 20 ml Toluol gelöst. Die gelbe Lösung wurde 6 h lang auf 110°C erhitzt, wobei sie sich dunkelrot färbte. Nach dem Abkühlen wurde das Lösungsmittel im HV entfernt. Der hellrote Rückstand wurde in wenig Hexan aufgenommen und bei -20°C kristallisiert. Man dekantierte die Mutterlauge und trocknete die hellroten Kristalle im HV. Es wurden 2.56 g ( 72 %) eines roten kristallinen Feststoffs erhalten.

### Beispiel 5

### (η⁶-Trimethylcyclopentadienyl-methylen)(η⁵-tetramethylcyclopentadienyl)-zirconiumphenyl, [(Cp"")(Fv"")ZrPh]

900 mg (1.85 mmol) Cp""₂ZrPh₂ nach Beispiel 2 hergestellt, wurden in 20 ml Toluol gelöst. Diese orange Lösung wurde 2 h lang auf 100°C erhitzt, wobei sie sich dunkelrot färbte. Nach dem Abkühlen wurde das Lösungsmittel im HV entfernt. Der Rückstand wurde in wenig *n*-Hexan aufgenommen und bei -20°C kristallisiert. Man dekantierte die Mutterlauge von den roten Kristallen und erhielt nach dem Trocknen einen rotbraunen Feststoff, der nach NMR-Daten aus zwei Isomeren im Verhältnis 92:8 besteht. Man erhielt 363 mg (48 %).

### Beispiel 6

### (η⁶-2,3,4,5-Tetramethylcyclopentadienyl-1-methylen)(η⁵-indenyl)zirconiumphenyl, [(Fv)(Ind)ZrPh]

Eine Lösung von 120 mg (0.24 mmol) Cp*IndZrPh₂ nach Beispiel 3 hergestellt, wurde in Toluol 1 h lang auf 100 °C erhitzt, wobei eine Verfärbung von gelb nach rot auftrat. Nach dem Abkühlen wurde das Lösungsmittel im HV entfernt. Der Rückstand wurde in wenig Hexan aufgenommen und bei -20°C kristallisiert. Man dekantierte die Mutterlauge von den roten Kristallen und trocknete im HV. Man erhielt 68 mg (67%).

### C. Polymerisationsbeispiele

### Beispiel 7

### Herstellung der Katalysatorlösung

20,5 mg (40 µmol) [Cp*₂ZrPh₂] aus Beispiel 1 wurden in 16 ml Toluol gelöst. Anschließend wurden 4 ml einer 1 molaren Triisobutylaluminium (TIBA)-Lösung in Toluol zugegeben und 60 Minuten bei 100°C erwärmt, wobei sich die zu Beginn farblose Lösung hellgelb färbte.

### Polymerisation von Ethylen

In einen 250 ml Glasreaktor wurden 100 ml Toluol und 0,5 ml einer 1 molaren Lösung von TIBA in Toluol vorgelegt und 10 min gerührt. Anschließend wurde mit einem Gaseinleitungsrohr kontinuierlich bei einem Druck von 1,1 bar Ethylen in die Lösung eingeleitet. Die Polymerisation wurde durch Zugabe von 1 ml der Katalysatorlösung gestartet. Nach 15 min Polymerisationsdauer bei einer Temperatur von 40°C und einem Ethylendruck von 1,1 bar wurde die Reaktion durch Zugabe von 10 ml Methanol abgestoppt, das entstandene Polymer abfiltriert, mit Aceton gewaschen und im Vakuumtrockenschrank getrocknet. Es svurden 2,02 g Polyethylen erhalten.

### Vergleichsbeispiel

Beispiel 7 wurde wiederholt, mit dem Unterschied, daß anstelle der Katalysatorlösung 1 ml einer Lösung von 17,7 mg (34 µmol) [Cp*₂ZrPh₂] in 16,6 ml Toluol ohne thermische Vorbehandlung verwendet wurde. Es wurde kein Polymer erhalten.

### Beispiel 8

### Herstellung der Katalysatorlösung

23,7 mg (54 µmol) [(Cp*)(Fv)ZrPh] aus Beispiel 4 wurden in 27 ml Toluol gelöst.

### Polymerisation von Ethylen

Die Polymerisation aus Beispiel 7 wurde wiederholt, mit dem Unterschied, daß anstelle von TIBA, 0,5 mmol Tris(2,4,4-Trimethyl-pentyl)aiuminium (TIOA) vorgelegt wurde und die Polymerisation durch Zugabe von 0,5 ml der Katalysatorlösung gestartet wurde. Es wurden 2,59 g Polyethylen erhalten.

### Beispiel 9

### Polymerisation von Ethylen

In einem 6 I-Autoklaven wurden 2 I Toluol und 2 ml TIBA vorglegt und 10 min gerührt. Dann wurde 1 ml der Katalysatorlösung aus Beispiel 8 zugegeben. Die Polymerisation erfolgte bei 40°C bei einem Ethylendruck von 10 bar. Nach 30 Minuten Polymerisationsdauer wurde der Autoklav entspannt, der Ansatz mit 1 I Methanol abgestoppt, der ausgefallene Polymerniederschlag abfiltriert, mit Aceton gewaschen und im Vakuumtrockenschrank getrocknet. Man erhielt 27,9 g hochkristallines Polyethylen mit einem Schmelzpunkt von 150°C gemäß DSC-Messung.

### Beispiel 10

### Herstellung der Katalysatorlösung

11,9 mg (24,4 µmol) [(Cp"")₂ZrPh₂] aus Beispiel 2 wurden in 10 ml Toluol gelöst. Anschließend wurden 2,5 ml einer 1 molaren Triisobutylaluminium (TIBA)-Lösung in Toluol zugegeben und 60 Minuten bei 100°C erwärmt, wobei sich die zu Beginn farblose Lösung hellgelb färbte.

### Copolymerisation von Ethylen und 1-Hexen

In einen 250 ml Glasreaktor wurden 100 ml Toluol, 0,5 ml einer 1 molaren Lösung von TIBA in Toluol und 2,5 ml 1-Hexen vorgelegt und 10 min gerührt. Anschließend wurde mit einem Gaseinleitungsrohr kontinuierlich bei einem Druck von 1,1 bar Ethylen in die Lösung eingeleitet. Die Polymerisation wurde durch Zugabe von 1 ml der Katalysatorlösung gestartet. Nach 15 min Polymerisationsdauer bei einer Temperatur von 40°C und einem Ethylendruck von 1,1 bar wurde die Reaktion durch Zugabe von 10 ml Methanol abgestoppt, das entstandene Polymer abfiltriert, mit Aceton gewaschen und im Vakuumtrockenschrank getrocknet. Es wurden 1,6 g eines Ethylen/1-Hexen-Copolymeren erhalten.

### Beispiel 11

### Herstellung der Katalysatorlösung

15 mg (36,6 µmol) [(Cp"")(Fv"")ZrPh] aus Beispiel 5 wurden in 36,6 ml Toluol gelöst.

### Copolymerisation von Ethylen und Propylen

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Toluol und 1 ml Triisobutylaluminium vorgelegt und 10 min gerührt. Dann wurden 58 g Propylen zudosiert. Die Innentemperatur wurde mit einem Thermostaten auf 40°C eingestellt. Anschließend wurde Ethylen zudosiert, bis der Reaktorinnendruck auf 4 bar anstieg. Durch Zugabe von 2 ml der Katalysatorlösung wurde die Polymerisation gestartet und kontinuierlich Ethylen zudosiert, so daß der Innendruck bei 40°C konstant 4 bar betrug. Nach 1 Stunde Polymerisationsdauer wurde die Polymerisation mit einer 1 %-igen HCl-Lösung in Methanol abgestoppt, 10 min gerührt und anschließend das Polymer mit Methanol ausgefällt. Das so erhaltene Polymer wurde mit Methanol gewaschen, isoliert und 20 h bei 60°C im Vakuum getrocknet, wobei 22,7 g Copolymer erhalten wurden. Die IR-spektroskopische Ermittlung der Zusammensetzung des Copolymeren ergab einen Einbau von 86,4 % Ethylen und 13,6 % Propylen. Mit der DSC-Methode wurde ein Tg von -29°C ermittelt.

### Beispiel 13

### Herstellung der Katalysatorlösung

13,6 mg ( 32,6 µmol) [(Fv)(Ind)ZrPh] aus Beispiel 6 wurden in 32,6 ml Toluol gelöst.

### Terpolymerisation von Ethylen, Propylen und 5-Ethyliden-2-norbornen

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen fiir Ethylen und Propylen ausgestattet ist, wurden 500 ml Toluol und 1 ml TIBA vorgelegt. Dann wurden 54 g Propylen und 5 ml 5-Ethyliden-2-norbornen zudosiert. Die Innentemperatur wurde mit einem Thermostaten auf 40°C eingestellt. Anschließend wurde Ethylen zudosiert, bis der Reaktorinnendruck auf 4 bar anstieg. Durch Zugabe von 5 ml der Katalysatorlösung wurde die Polymerisation gestartet und kontinuierlich Ethylen zudosiert, so daß der Innendruck bei 40°C konstant 4 bar betrug. Nach 1 Stunde Polymerisationsdauer wurde der Autoklav entspannt und die Polymerlösung mit einer 0,1 Gew-% Hexan-Lösung Vulkanox BKF versetzt, 10 min gerührt und anschließend das Polymer mit Methanol ausgefällt. Das so erhaltene Polymer wurde isoliert und 20 h bei 60°C im Vakuum getrocknet, wobei 89,7 g Terpolymer erhalten wurden. Die IR-spektroskopische Ermittlung der Zusammensetzung des Terpolymeren ergab einen Einbau von 75,2 % Ethylen, 24,3 % Propylen und 0,5 % ENB. Mit der DSC-Methode wurde ein Tg von -37°C ermittelt.

## Patentansprüche

1. Katalysatorsystem bestehend aus
a) einem Fulven-Metallkomplex der Formel (I) 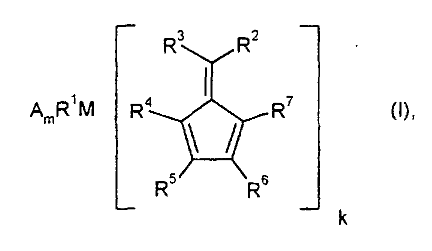 wobei
M ein Metallkation aus der Gruppe IIIb, IVb, Vb, VIb oder der Lanthaniden oder der Actiniden des Periodensystems der Elemente [N.N. Greenwood, A. Earnshaw, Chemie der Elemente, VCH 1990] ist,
A ein gegebenenfalls ein- oder mehrfach verbrücktes Anion bedeutet,
R¹, R², R³, R⁴, R⁵, R⁶, R⁷ gleich oder verschieden sind und stehen für Wasserstoff, Halogen, eine Cyanogruppe, eine C₁- bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe) eine C₆- bis C₂₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀- Arylalkenylgruppe, eine C₂ bis C₁₀-Alkinylgruppe, eine gegebenenfalls substituierte Silylgruppe oder jeweils zusammen mit den sie verbindenden Atomen ein oder mehrere Ringsysteme bilden, welche ein oder mehrere Heteroatome enthalten können,
m 0, 1, 2 oder 3 bedeutet sowie
k 1, 2 oder 3 ist und die Summe von m + k in Abhängigkeit von der Oxidationsstufe von M 1 bis 5 beträgt
und
b) einem zur Aktivierung des Metallkomplexes a) geeignete Aluminoxanund Bor-freie Lewissäure, wobei das molare Verhältnis von Komponente a) zu Komponente b) im Bereich von 1:0,1 bis 1:10 000, bevorzugt 1:1 bis 1:1 000, liegt.

2. Katalysatorsystem gemäß Anspruch 1, wobei als Lewissäure eine Verbindung des Aluminiums, Zinks oder Magnesiums verwendet wird.

3. Katalysatorsystem gemäß Anspruch 1, wobei als Lewissäure eine Trialkylaluminiumverbindung verwendet wird.

4. Verfahren zur Herstellung eines Katalysatorsystems nach einem der Ansprüche 1 bis 3, **dadurch gekennzeichnet, daß** ein Gemisch aus einer zur Aktivierung geeigneten Aluminoxan- und Bor-freien Lewissäure und einem Metallkomplex der Formel (II) 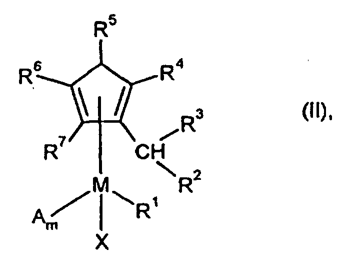 wobei
M, A, R¹ bis R⁷ die gemäß Anspruch 1) angegebene Bedeutung haben und
X für Wasserstoff, Halogen, eine C₁- bis C₃₀-Alkylgruppe, eine C₆- bis C₁₀-Arylgruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkeaylgruppe, eine C₂- bis C₁₀-Alkinylgruppe, eine gegebenenfalls substituierte Silylgruppe steht,
in einem geeigneten Reaktionsmedium thermisch im Temperaturbereich von 60°C bis 250 °C behandelt wird.

5. Verfahren nach Anspruch 4, **dadurch gekennzeichnet, daß** die thermische Behandlung im Temperaturbereich von 90°C bis 150°C erfolgt.

6. Verfahren nach Anspruch 4 oder 5, **dadurch gekennzeichnet, daß** die Dauer der thermischen Behandlung im Bereich von 1 Minute bis 20 Stunden, bevorzugt von 15 Minuten bis 6 Stunden beträgt.

7. Verfahren nach einem der Ansprüche 4 bis 6, **dadurch gekennzeichnet, daß** die thermische Behandlung in einem aliphatischen oder aromatischen Lösungsmittel durchgeführt wird.

8. Verfahren nach einem der Ansprüche 4 bis 7, **dadurch gekennzeichnet, daß** die thermische Behandlung nicht in Gegenwart eines Olefins oder Diolefins erfolgt.

9. Verwendung des Katalysatorsystems nach einem der Ansprüche 1 bis 3 zur Polymerisation von Olefinen und/oder Dienen.

## Claims

1. Catalyst system consisting of
a) a fulvene metal complex of formula (I) 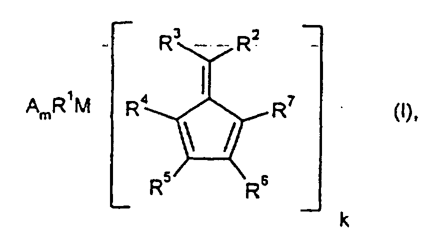 in which
M is a metal cation from the group IIIb, IVb, Vb, VIb or of the lanthanides or of the actinides of the Periodic Table of the Elements [N.N. Greenwood, A. Earnshaw, Chemie der Elemente, VCH 1990],
A signifies an optionally uni- or multi-bridged anionic ligand,
R¹, R², R³, R⁴, R⁵, R⁶, R⁷ are identical or different and stand for hydrogen, halogen, a cyano group, a C₁ to C₂₀ alkyl group, a C₁ to C₁₀ fluoroalkyl group, a C₆ to C₁₀ fluoroaryl group, a C₁ to C₁₀ alkoxy group, a C₆ to C₂₀ aryl group, a C₆ to C₁₀ aryloxy group, a C₂ to C₁₀ alkenyl group, a C₇ to C₄₀ arylalkyl group, a C₇ to C₄₀ alkylaryl group, a C₈ to C₄₀ arylalkenyl group, a C₂ to C₁₀ alkinyl group, an optionally substituted silyl group or form respectively together with the atoms linking them one or more ring systems, which can contain one or more hetero atoms,
m signifies 0, 1, 2 or 3 and
k is 1, 2 or 3 and the sum of m + k comes to 1 to 5 as a function of the oxidation stage of M
and
b) an aluminoxane- and boron-free Lewis acid suitable for activating the metal complex a), wherein the molar ratio of component a) to component b) lies in the range of 1 : 0.1 to 1 : 10 000, preferably 1 : 1 to 1 : 1 000.

2. Catalyst system according to claim 1, wherein a compound of aluminium, zinc or magnesium is used as Lewis acid.

3. Catalyst system according to claim 1, wherein a trialkylaluminium compound is used as Lewis acid.

4. Process for producing a catalyst system according to one of claims 1 to 3, **characterised in that** a mixture of an aluminoxane- and boron-free Lewis acid suitable for activation and a metal complex of formula (II) 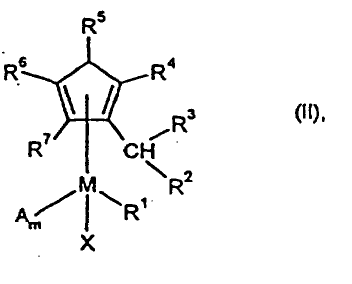 in which
M, A, R¹ to R⁷ have the meaning indicated according to claim 1) and
X stands for hydrogen, halogen, a C₁ to C₃₀ alkyl group, a C₆ to C₁₀ aryl group, a C₂ to C₁₀ alkenyl group, a C₇ to C₄₀ arylalkyl group, a C₇ to C₄₀ alkylaryl group, a C₈ to C₄₀ arylalkenyl group, a C₂ to C₁₀ alkinyl group, an optionally substituted silyl group,
is treated thermally in the temperature range from 60 °C to 250 °C in a suitable reaction medium.

5. Process according to claim 4, **characterised in that** the thermal treatment takes place in the temperature range from 90 °C to 150 °C.

6. Process according to claim 4 or 5, **characterised in that** the period of the thermal treatment is in the range from 1 minute to 20 hours, preferably from 15 minutes to 6 hours.

7. Process according to one of claims 4 to 6, **characterised in that** the thermal treatment is carried out in an aliphatic or aromatic solvent.

8. Process according to one of claims 4 to 7, **characterised in that** the thermal treatment does not take place in the presence of an olefin or diolefin.

9. Use of the catalyst system according to one of claims 1 to 3 for the polymerisation of olefins and/or dienes.

## Revendications

1. Système catalytique constitué par
a) un complexe métallique de fulvène de formule 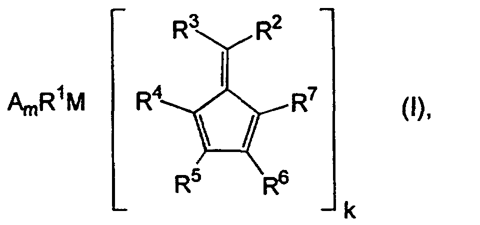 dans laquelle
M est un cation métallique du groupe IIIb, IVb, VIb ou des lanthanides ou des actinides du système périodique des éléments [N.N. Greenwood, A. Earnshaw, Chemie der Elemente, VCH 1990],
A signifie un anion éventuellement ponté une fois ou plusieurs fois,
R¹, R², R³, R⁴, R⁵, R⁶, R⁷ sont identiques ou différents et représentent l'hydrogène, un halogène, un groupe cyano, un groupe alkyle en C₁ à C₂₀, un groupe fluoroalkyle en C₁ à C₁₀, un groupe fluoroaryle en C₆ à C₁₀, un groupe alcoxy en C₁ à C₁₀, un groupe aryle en C₆ à C₂₀, un groupe aryloxy en C₆ à C₁₀, un groupe alcényle en C₂ à C₁₀, un groupe arylalkyle en C₇ à C₄₀, un groupe alkylaryle en C₇ à C₄₀, un groupe arylalcényle en C₈ à C₄₀, un groupe alcynyle en C₂ à C₁₀, un groupe silyle éventuellement substitué ou formant à chaque fois ensemble avec les atomes les liant un ou plusieurs systèmes cycliques, qui peuvent contenir un ou plusieurs hétéroatomes,
m signifie 0, 1, 2 ou 3 et
k signifie 1, 2 ou 3 et la somme de m+k est de 1 à 5 en fonction de l'état d'oxydation de M et
b) un acide de Lewis exempt d'aluminoxane et de bore approprié pour activer le complexe métallique a), dans lequel le rapport molaire du composant a) au composant b) est dans la plage de 1 : 0,1 à 1 : 10 000, de préférence 1 : 1 à 1 : 1000.

2. Système catalytique selon la revendication 1, dans lequel on utilise comme acide de Lewis un composé d'aluminium, de zinc ou de magnésium.

3. Système catalytique selon la revendication 1, dans lequel on utilise comme acide de Lewis un composé trialkylaluminium.

4. Procédé de préparation d'un système catalytique selon l'une des revendications 1 à 3, **caractérisé en ce qu'**on traite thermiquement dans une plage de température de 60°C à 250°C dans un milieu réactionnel approprié, un mélange d'un acide de Lewis exempt d'aluminoxane et de bore approprié pour l'activation et d'un complexe métallique de formule (II) 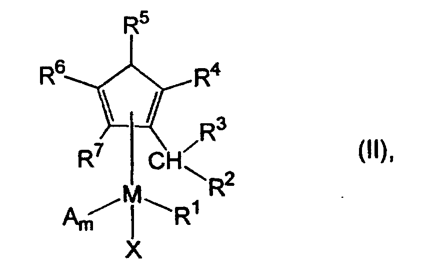 dans laquelle
M, A, R¹ à R⁷ ont les significations mentionnées dans la revendication 1 et
X signifie l'hydrogène, un halogène, un groupe alkyle en C₁ à C₃₀, un groupe aryle en C₆ à C₁₀, un groupe alcényle en C₂ à C₁₀, un groupe arylalkyle en C₇ à C₄₀, un groupe alkylaryle en C₇ à C₄₀, un groupe arylalcényle en C₈ à C₄₀, un groupe alcinyle en C₂ à C₁₀, un groupe silyle éventuellement substitué.

5. procédé selon la revendication 4, **caractérisé en ce qu'**on effectue le traitement thermique dans une plage de température de 90°C à 150°C.

6. Procédé selon la revendication 4 ou 5, **caractérisé en ce que** la durée du traitement thermique est dans la plage de 1 minute à 20 heures, de préférence 15 minutes à 6 heures.

7. Procédé selon une des revendications 4 à 6, **caractérisé en ce que** le traitement thermique est effectué dans un solvant aliphatique ou aromatique.

8. Procédé selon une des revendications 4 à 7, **caractérisé en ce que** le traitement thermique n'a pas lieu en présence d'une oléfine ou d'une dioléfine.

9. Utilisation du système catalytique selon une des revendications 1 à 3, pour la polymérisation des oléfines et/ou des diènes.
